# FASCICULE DE BREVET EUROPEEN

(11) **EP 0 680 429 B1**
(45) Date de publication et mention de la délivrance du brevet: **19.03.1997**
(21) Numéro de dépôt: 94905134.6
(22) Date de dépôt: 19.01.1994
(51) Int. Cl.: B62B 7/10, B62B 9/20, B62B 7/14

(54) **ENSEMBLE PLIABLE POUR LE SUPPORT OU LE TRANSPORT D'UNE PERSONNE**
FALTBARE EINHEIT ZUM TRAGEN ODER TRANSPORT EINER PERSON
FOLDABLE ASSEMBLY FOR THE SUPPORT OR TRANSPORTATION OF A PERSON

(30) Priorité: 20.01.1993 FR 9300697; 06.08.1993 FR 9309926; 24.08.1993 FR 9310338
(43) Date de publication de la demande: 08.11.1995
(73) Titulaire: MGB, F-01600 Trévoux (FR)
(72) Inventeur: BONNIER, Michel, F-01600 Trévoux (FR); BONNIER, Georges, F-69100 Villeurbanne (FR); TAILLARD, André, F-69380 Chessy-les-Mines (FR)
(74) Mandataire: Guerre, Dominique
(86) Numéro de dépôt international: FR9400064
(87) Numéro de publication internationale: WO9416928

(56) Documents cités:
- DE-U- 9 102 763
- GB-A- 1 176 516
- GB-A- 1 176 517
- US-A- 4 354 689

## Description

La présente invention concerne de manière générale, un ensemble pliable pour le support d'une personne, et par exemple un véhicule pour le transport d'un enfant, susceptible d'être déplié dans une configuration d'utilisation, par exemple dans une configuration de roulage, dans laquelle il peut être par exemple poussé par une personne accompagnante, et d'être replié dans une configuration de rangement, ou de transport. L'invention concerne en particulier, mais de manière non exclusive, un véhicule pliable pour le transport d'un enfant, qu'il s'agisse d'une poussette ou d'un landau par exemple ; étant entendu que la présente invention peut s'appliquer, d'une part, à d'autres véhicules pliables, tels qu'un siège à roulettes pour une personne handicapée, et d'autre part, à d'autres ensembles pliables, tels qu'un siège d'intérieur ou de jardin.

On connaît déjà par WO 86/03464 un ensemble pliable composé :
- d'une structure d'appui ou de roulage avec deux longerons,
- d'une structure de portage du support de la personne, et par exemple du siège, ou berceau, cette structure comportant deux montants articulés à leur base aux extrémités des longerons et pouvant occuper, une position de rangement dans laquelle ces montants sont sensiblement parallèles aux longerons, et une position d'utilisation dans laquelle, ils forment un angle aigu par rapport aux longerons,
- de moyens de calage des deux structures dans chacune de leurs deux positions,
- et d'une poignée de guidage dont les branches sont montées coulissantes par rapport aux montants de la structure de portage.

Dans cet ensemble pliable, le support pour la personne est fixé à demeure sur les montants de la structure de portage de sorte que, en position d'utilisation, ce support est situé à une hauteur constante du sol alors même que pour les enfants en bas âge, il est préférable que la position allongée de sommeil, soit plus basse que la position assise, ne serait-ce que pour améliorer la stabilité de l'ensemble en abaissant son centre de gravité.

Par ailleurs, lorsque l'ensemble pliable est amené en configuration de rangement, la position fixe du support pour la personne sur la structure de portage forme, même si ce support est pliable, une excroissance augmentant l'encombrement en longueur à l'une des extrémités de l'ensemble plié et ne favorisant pas le rangement de cet ensemble.

A cela, il faut ajouter que les nombreuses manipulations nécessaires au passage de l'une à l'autre des configurations rendent ces transformations difficiles et parfois dangereuses pour les doigts.

La présente invention a pour but de remédier à ces inconvénients en fournissant un ensemble pliable du type précité permettant de modifier la distance par rapport au sol du support pour la personne ou enfant, de réduire le nombre de manipulations nécessaires aux changements de configuration, tout en réduisant le coût de construction.

A cet effet, dans l'ensemble pliable selon l'invention, le support de la personne est fixé entre et sur les deux branches de la poignée de guidage tandis qu'un mécanisme de calage en hauteur, en au moins deux position prédéterminées dudit support dans sa configuration d'utilisation, est interposé entre au moins un montant de la structure de portage et la branche correspondante de la poignée de guidage.

Grâce à cet agencement, lorsque l'ensemble est en configuration d'utilisation, le support de la personne, et par exemple le siège, peut occuper aux moins deux positions, à savoir une position haute d'assise et une position basse de couchage. Selon le nombre de positions tolérées par le mécanisme de calage, cette position basse peut être confondue ou différente de la position occupée par le support de la personne lorsque l'ensemble est en configuration de rangement.

Dans une forme d'exécution de l'invention, les moyens de calage angulaire des deux structures comprennent, au moins d'un côté de ces structures :
- un levier de triangulation dont l'extrémité inférieure est articulée sur le longeron correspondant de la structure d'appui ou de roulage, et est associée à des moyens de rappel élastique, et dont l'extrémité supérieure est solidaire d'un axe transversal monté coulissant dans une lumière longitudinale du montant correspondant,
- et un dispositif de verrouillage à genouillère réversible composé de deux leviers disposés dans le prolongement l'un de l'autre au voisinage de la lumière précitée, chacun de ces leviers, d'une part, étant articulé sur le montant correspondant de la structure de portage, au-delà de l'extrémité correspondant de la lumière, d'autre part, étant articulé par rapport à l'autre levier au moyen d'une articulation coulissante formée par un pion coulissant dans une lumière, et de plus, comportant un cran de calage de l'axe supérieur du levier de triangulation dans l'une ou l'autre de ses positions de rangement et d'utilisation.

Ce dispositif, mettant en oeuvre des moyens simples, peu coûteux et fiables, permet d'obtenir un excellent calage angulaire des deux structures, dans chacune de leur configuration.

Avantageusement, les branches de la poignée sont chacune solidaire d'un coulisseau inférieur pouvant coulisser sur une glissière de la structure de portage, ce coulisseau portant, articulés sur lui :
- d'une part, un premier levier de positionnement des branches, dont l'une des extrémités est conformée en verrou de calage et est apte à pénétrer dans l'un quelconque des évidements ménagés dans le montant correspondant de la structure de portage, l'autre extrémité dudit levier prenant appui sur un ressort de rappel tendant à le maintenir en position de calage, et étant relié, par un lien souple, à des moyens de commande disposés sur la barre transversale de la poignée,
- et, d'autre part, un second levier, de déverrouillage de la fonction pliage-dépliage dont l'une des extrémités est reliée, par un lien souple à des moyens de commande disposés sur la barre transversale de la poignée, l'autre extrémité de ce levier étant apte à venir en contact avec un redan saillant latéralement de l'un des leviers de la genouillère réversible de verrouillage de la fonction pliage-dépliage, pour amener cette genouillère en position de déverrouillage.

Avec cette disposition, les deux commandes, respectivement de verrouillage du calage angulaire des deux structures, et de déverrouillage du positionnement des branches de la poignée et du support de la personne sont centralisées sur la barre transversale de la poignée, ce qui facilite respectivement la procédure de réglage en hauteur du support, du siège, ou berceau, et la procédure de pliage ou dépliage.

Un autre avantage de cette disposition provient du fait que le second levier, de déverrouillage de la fonction pliage-dépliage, est disposé sur le coulisseau, ce qui lui permet de n'être opérant que dans la position où il est au voisinage de la genouillère, c'est à dire uniquement lorsque les montants de la poignée sont rentrés dans ceux de la structure de portage. Cet agencement simple empêche les fausses manoeuvres et évite d'avoir à prévoir des moyens de sécurité supplémentaires.

Dans une forme d'exécution perforée de l'invention, chacun des branches de la poignée est solidaire d'une traverse tubulaire formant poignée, et comportant des moyens de commande composés :
- de deux poulies indépendantes, disposées côte à côte, montées libres en rotation autour d'un axe longitudinal et à chacune desquelles sont fixées les extrémités des liens souples provenant, pour l'une, des premiers leviers, et pour l'autre, des seconds leviers,
- d'un levier basculeur articulé entre les deux poulies autour d'un axe longitudinal et dont chacune des extrémités est apte à faire pivoter d'une fraction de tour la poulie correspondante,
- et d'un moyen déverrouillable de calage en rotation de ces poulies.

Avec ce dispositif, pour commander l'une ou l'autre des fonctions, il suffit, dans un premier temps, d'amener en position de déverrouillage le moyen de calage en rotation des poulies, puis de basculer le levier basculeur, dans un sens, pour commander le déverrouillage des montants de la poignée par rapport à ceux de la structure de portage, et, dans l'autre sens, pour commander le déverrouillage des moyens calant la structure de portage par rapport à la structure de roulage.

Dans une forme d'exécution, le support de la personne est lié à chacune des branches de la poignée avec interposition d'un organe de réglage en orientation dudit support, ledit organe étant muni de moyens de verrouillage dans chacune de ses positions angulaires.

Un tel organe améliore le confort de l'utilisateur mais permet aussi, en configuration de rangement, de donner au support, siège ou berceau, une orientation réduisant l'encombrement de l'ensemble.

Dans une autre forme de réalisation, le support de la personne est lié à chacune des branches de la poignée avec interposition d'un moyen de fixation amovible comprenant :
- sur l'un des éléments jambe ou support, un corps de fixation avec une glissière de section en "C", borgne, débouchant vers le haut,
- sur l'autre élément, une pièce de fixation avec un tenon ayant une section transversale en "T" apte à pénétrer dans la glissière en "C";
- et des moyens de verrouillage, en fin de course d'engagement, du tenon dans la glissière.

Ce dispositif de montage permet une mise en place et un retrait instantané du support, siège ou berceau, et cela sans utilisation d'outils. Cela permet de remplacer rapidement un support par un autre, mais aussi de retourner le support pour que l'utilisateur puisse regarder vers l'avant ou vers l'arrière, par rapport au sens de déplacement de l'ensemble, et surtout, de retirer le support de la structure de portage pour réduire l'encombrement de l'ensemble dans sa configuration de rangement.

Une réalisation de cet ensemble combine le réglage en orientation et l'amovibilité du support par rapport à la structure de portage.

D'autres caractéristiques et avantages ressortiront de la description qui suit en référence au dessin schématique annexé, représentant à titre d'exemple non limitatif, une forme d'exécution de l'invention dans le cas de son application à une poussette pour enfant.
Figure 1 est une vue en perspective de l'ensemble de la poussette, lorsqu'elle est en position de roulage,
Figure 2 en est une vue de côté, lorsqu'elle est en position de rangement,
Figure 3 est une vue partielle en coupe suivant III-III de figure 1, montrant les moyens de commande,
Figure 4 est une vue partielle par dessus, avec coupe partielle de la poignée, montrant les moyens de commande,
Figure 5 est une vue de côté en coupe transversale de la poussette, lorsqu'elle est en position de roulage avec les montants de la poignée en position, totalement rentrés,
Figures 6 et 7 sont des vues partielles, en coupe, de la partie inférieure de la structure de portage, lorsque la poignée est en position basse et, respectivement, lors de l'actionnement du verrou de calage des montants et lors de l'actionnement du levier de déverrouillage de la genouillère,
Figure 8 est une vue en coupe suivant VIII-VIII de figure 5 montrant, à échelle agrandie, le coulisseau solidaire de l'un des montants de la poignée,
Figure 9 est une vue en perspective éclatée montrant les composants d'une forme d'exécution de l'organe de réglage de l'orientation angulaire du support de la personne ou siège,

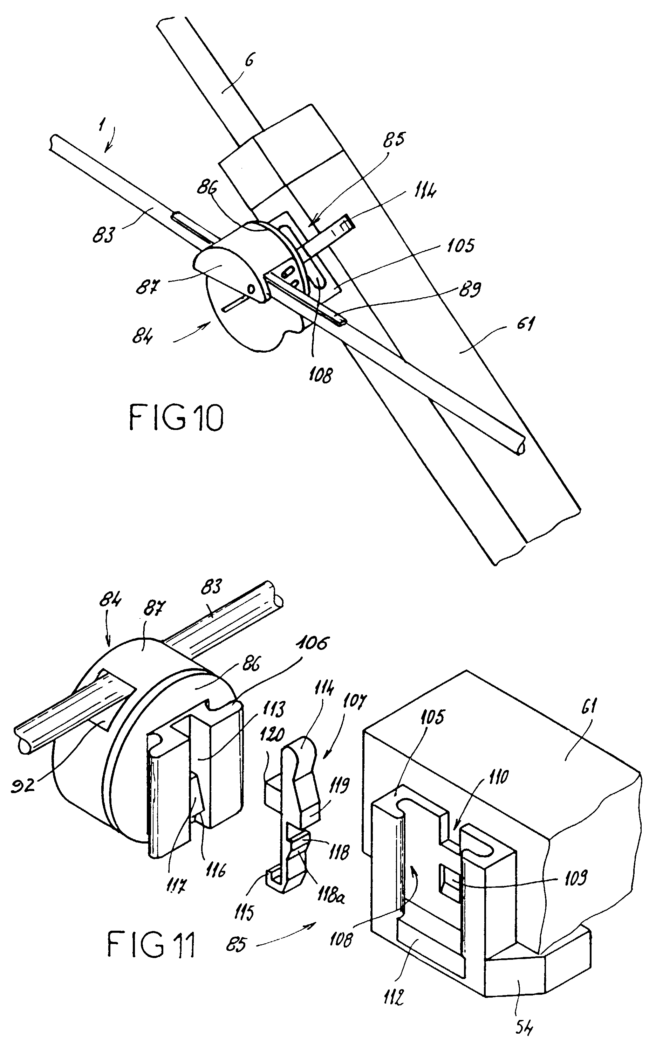

Figure 10 est une vue partielle en perspective d'une forme d'exécution des moyens de fixation amovible du support de la personne sur l'ossature de portage lorsque ce moyen est combiné avec l'organe de réglage de figure 9,
Figure 11 est une vue en perspective montrant les éléments essentiels des moyens de fixation amovible du support de la personne.

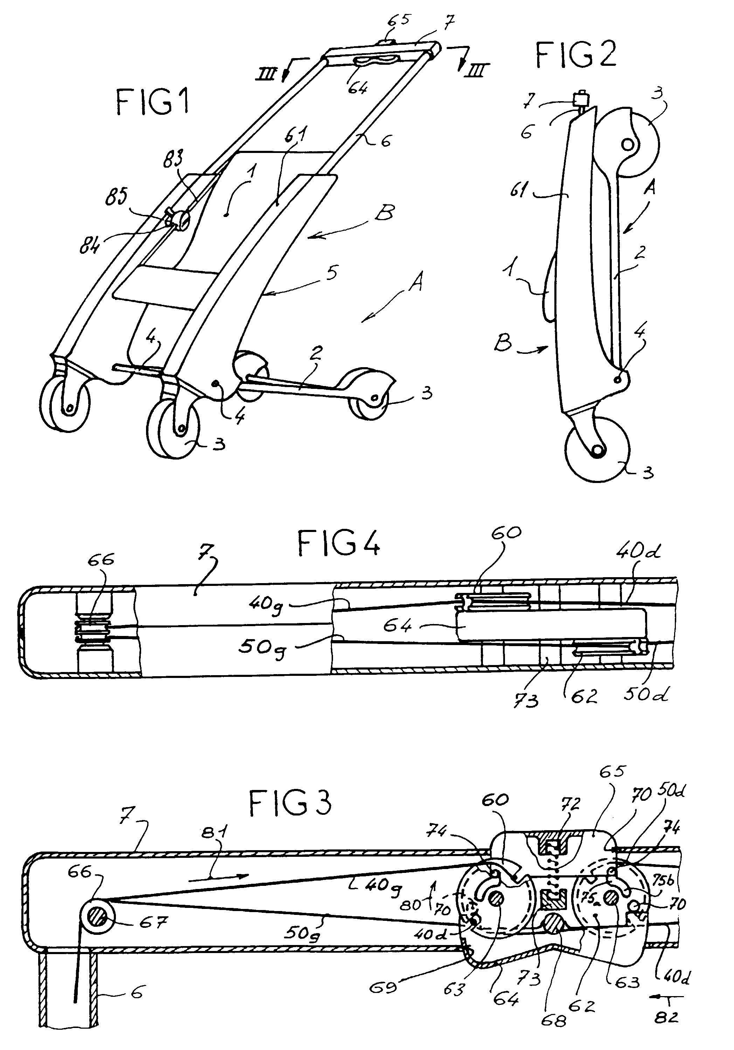

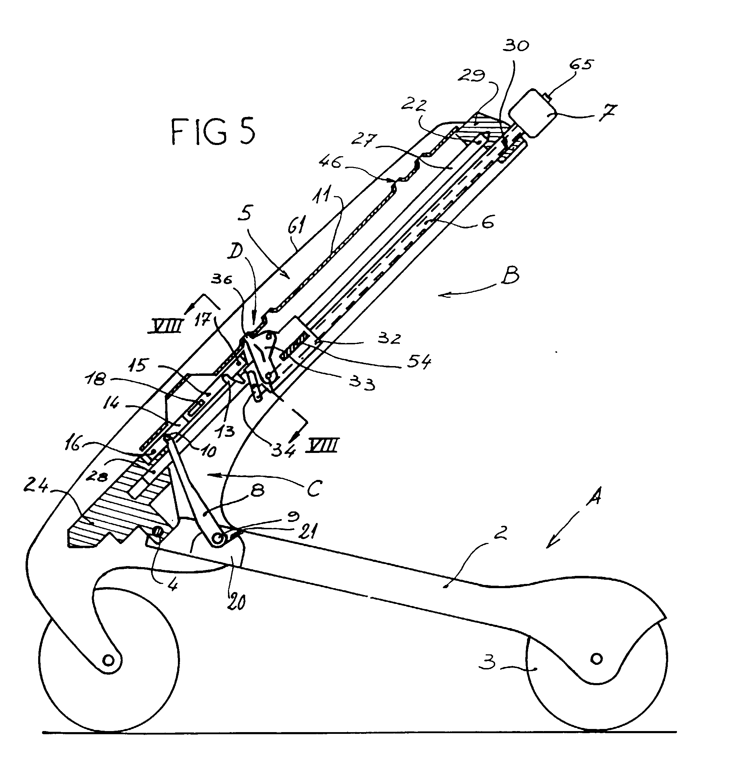

Comme montré à la figure 1, cette poussette est composée d'une structure de roulage désignée, de façon générale, par la référence A, et d'une structure de portage désignée par la référence B. La structure de roulage est composée de deux longerons 2, porteurs de roues 3 et articulés autour d'un axe transversal 4 à la base de la structure de portage B. Cette dernière est composée de deux montants 5 portant les deux branches 6 d'une poignée de guidage 7. Au moins l'un et, de préférence, chacun des montants 5 de la structure de portage B est relié au bras 2 correspondant de la structure de roulage par un mécanisme de calage C (figure 5).

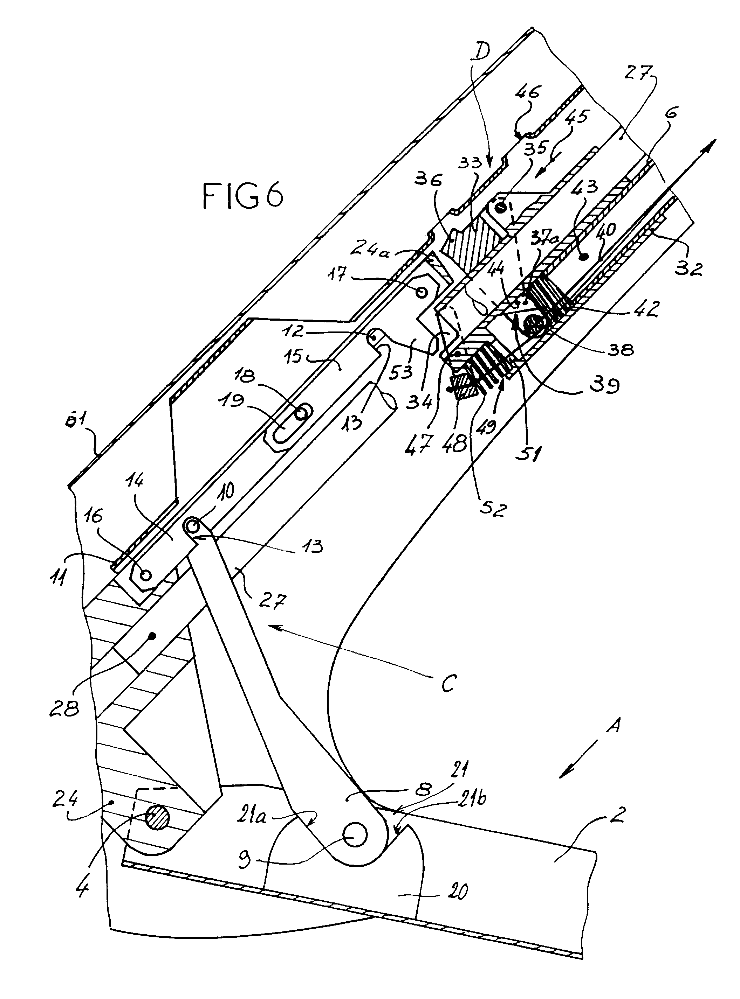

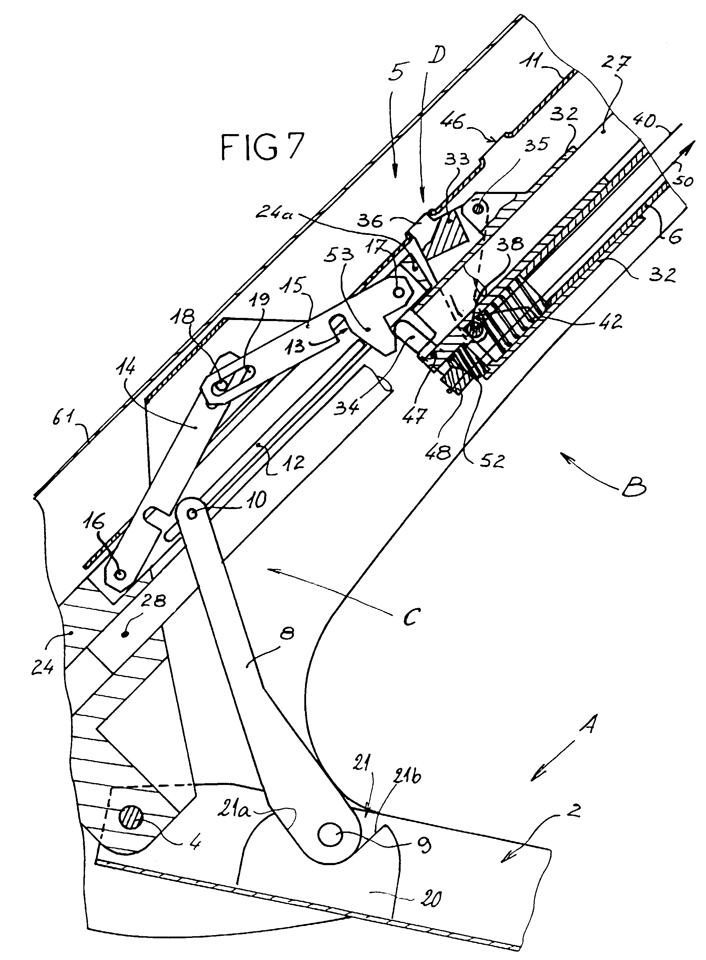

Dans la forme d'exécution représentée à la figure 5, et encore plus en détails aux figures 6 et 7, ce mécanisme comprend un levier de triangulation 8 dont l'extrémité inférieure est articulée en 9 sur le longeron 2 correspondant et dont l'extrémité supérieure est munie d'un axe transversal 10. Une partie de cet axe peut coulisser dans une lumière longitudinale 12, (figure 7) ménagée dans le support d'articulation 24a décrit plus loin, tandis que son autre partie est destinée à coopérer avec l'un ou l'autre des crans 13, ménagés dans les deux leviers, respectivement 14 et 15, d'une genouillère réversible. Le levier 14 de cette genouillère est articulé en 16 sur le support 24a, au-dessous de l'extrémité de la lumière 12, tandis que le levier 15 est articulé par l'une de ses extrémités en 17 sur le même support mais, au-dessus de l'extrémité de la lumière 12. Le levier 14 est muni d'un pion 18 pouvant coulisser dans une lumière 19 ménagée à l'extrémité libre du levier 15.

Le mécanisme de calage comporte également des moyens de rappel du levier de triangulation 8, constitués, dans cette forme d'exécution, par un bloc 20 en matériau élastique, fixé dans le longeron 2 au-dessus de l'articulation 9. Un logement 21 formé dans ce bloc présente deux faces d'appui 21a et 21b aptes à venir en contact avec les parties correspondantes du levier, en fin de mouvement de pliage ou de dépliage, pour comprimer localement le bloc et engendrer des forces de rappel élastique tendant à faire pivoter le levier 8, au début de chacune des phases de déverrouillage, pour amorcer l'ouverture de la genouillère réversible 14,15.

La figure 6 montre que, lorsque la poussette est en configuration d'utilisation, l'axe 10 du levier de triangulation 8 est immobilisé dans le cran inférieur 13 de la genouillère et assure ainsi le calage du compas à angle aigu formé par le longeron 2 de la structure de roulage A et par le montant 5 de la structure de portage B.

La figure 7 montre que, lors du pliage de la poussette pour l'amener dans la configuration de rangement, représentée à la figure 2, la genouillère 14-15 libère l'axe 10, qui peut ainsi coulisser dans la lumière 12, jusqu'à venir au-dessous du cran supérieur 13 puis dans ce cran, position dans laquelle le longeron 2 correspondant est sensiblement parallèle à la direction générale de la structure de portage, comme montré à la figure 2.

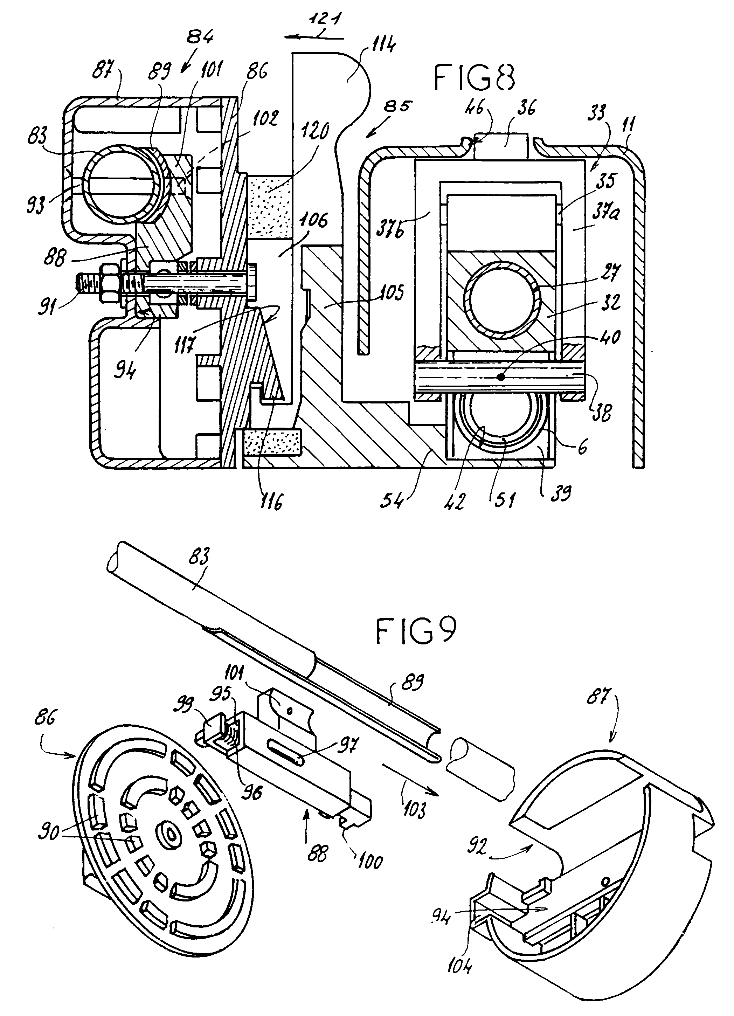

L'armature 11 de chaque montant 5 est réalisée dans une pièce rigide qui, métallique ou en matière moulée et comme montré à la figure 8, présente en section transversale la forme générale d'un "U" dont la concavité est dirigée vers le bas. A son extrémité inférieure, et comme montré à la figure 5, cette armature est solidaire d'une noix 24 qui est en matière synthétique et constitue palier d'articulation pour l'axe 4 d'articulation des deux structures A-B, mais aussi support d'articulation 24a pour la genouillère réversible 14-15, comme montré figures 6 et 7, et fût d'ancrage pour l'extrémité inférieure d'une glissière verticale 27.

Dans la forme d'exécution représentée, cette glissière est constituée par un tube métallique qui est lié à la noix 24 par une goupille transversale 28.

Comme montré figure 5, l'extrémité supérieure de l'armature 11 est solidaire d'une noix supérieure 29, également en matière synthétique et formant fût d'ancrage pour l'autre extrémité de la glissière 27, calée par une goupille 22, et palier 30 pour la branche 6 correspondante de la poignée 7.

Chacune des branches 6 est solidaire, à son extrémité inférieure, d'un coulisseau 32 monté coulissant sur la glissière 27 et portant un premier levier 33, faisant partie d'un mécanisme D de calage en hauteur, et un second levier 34. Comme le montre plus en détails les figures 6 à 8, le premier levier 33 est articulé sur le coulisseau 32 par un axe transversal 35 et présente, dans sa partie supérieure, un tenon 36 formant verrou de calage. Dans sa partie inférieure, il a la forme d'une chape dont les deux branches 37a-37b (figure 8) sont disposées de part et d'autre du coulisseau 32. Ces deux branches portent un axe transversal 38, qui traverse le coulisseau 32 par une lumière 39, visible aux figures 6 et 7. Cet axe sert de point d'accrochage à l'extrémité inférieure d'un lien souple 40, disposé longitudinalement dans la branche 6, et point d'appui pour un ressort 42, dont l'autre extrémité est en appui contre l'extrémité de la branche 6 liée au coulisseau par une goupille 43. Le ressort 42, qui est disposé dans le logement 44 ménagé dans le coulisseau pour recevoir l'extrémité inférieure de la branche 6, communique au premier levier 33, un effort dans le sens de la flèche 45. Cet effort tend constamment à engager la partie du levier en forme de verrou 36 dans l'une des évidements 46, ménagés dans l'âme de l'armature 11.

Le second levier 34, porté par le coulisseau 32, est disposé, d'un côté de ce coulisseau. Il est articulé sur ce dernier par un axe transversal 47 et est solidaire, par l'une de ses extrémités, d'un talon transversal 48 s'étendant devant le coulisseau. Plus précisément, et comme montré aux figures 6 et 7, ce talon s'étend devant un chambrage 49 communiquant, par un alésage de transition 51, avec le logement 44 ménagé dans le coulisseau. Ce talon 48 constitue organe d'accrochage pour un lien souple 50 traversant les alésages précités et allant vers l'intérieur de la branche 6. Un ressort 52, disposé dans le chambrage 49, vient en appui sur le talon 48 pour maintenir l'ensemble du levier dans une position d'inaction, dans laquelle il est pivoté pour rester dans l'encombrement du coulisseau 32, comme montré figure 6. Cette même figure montre que, lorsque le coulisseau est dans sa position la plus basse, la trajectoire de l'extrémité libre du second levier 34 peut sécanter un redan 53, saillant du levier 15 de la genouillère et dont l'utilité sera précisée plus loin.

La figure 8 montre que le coulisseau 32 est solidaire d'une patte transversale 54 sur laquelle sont fixés les moyens de fixation et d 'articulation du siège 1 porté par la structure de portage B. Ces moyens seront décrits plus loin.

Les figures 1 et 2 montrent que l'ensemble de l'armature 11 de chacun des montants de la structure de portage B est recouvert par un capotage 61 cachant tous les mécanismes qui viennent d'être décrits, respectivement de calage des branches 6 dans la structure de portage B, et de la structure de portage B par rapport à la structure de roulage A.

Suivant une autre caractéristique de l'invention, les liens souples 40 et 50 associés aux moyens de calage précités aboutissent à des moyens de commande disposés dans la barre transversale 7 formant poignée, moyens qui vont être décrits en référence aux figures 3 et 4.

La figure 3 montre que la poignée 7 est constituée par une traverse tubulaire qui communique avec l'intérieur des extrémités des branches tubulaires 6 auxquelles elle est liée. Dans sa partie centrale, cette traverse porte donc des moyens de commande qui sont composés de deux poulies 60 et 62, montées libres en rotation sur des axes transversaux 63, d'un levier basculeur 64 et d'un poussoir de sécurité 65. Sur les poulies 60 sont accrochées les extrémités des liens souples 40g et 40d provenant, respectivement, du montant gauche et du montant droit de la structure de portage B, et commandant le déverrouillage des branches. Sur celle 62 sont accrochés les liens 50g et 50d provenant des mêmes montants, mais commandant la fonction pliage-dépliage. Un renvoi, et par exemple un galet 66 monté libre en rotation sur un axe transversal 67, est disposé à proximité du débouché de chaque branche 6 dans chaque extrémité de la traverse 7, pour faciliter le renvoi des liens souples en direction des poulies 60 et 62.

Le levier basculeur 64 est articulé autour d'un axe transversal 68 de la traverse 7. Il traverse la paroi inférieure par une ouverture 69. Chacune des extrémités de ce levier est apte à venir en appui avec un doigt excentré 70 saillant de l'une des faces diamétrales de la poulie correspondante. La figure 4 montre que le levier basculeur est disposé dans l'intervalle entre les poulies 60-62, ce qui implique que le doigt 70 de chaque poulie fasse saillie en direction de l'autre poulie.

Le poussoir de sécurité 65 est monté coulissant par rapport à la traverse 7 dont il traverse la paroi supérieure par une ouverture 70. Un ressort de rappel 72, interposé entre ce poussoir de sécurité et une barrette transversale 73 tend à chasser ce poussoir de sécurité vers l'extérieur. Ce poussoir de sécurité qui, comme le levier basculeur 64 est disposé dans l'intervalle entre les deux poulies, comporte, à chacune de ses extrémités et en saillie de l'une de ses faces, deux ergots 74 coopérant avec des lumières de chacune des poulies. Chaque lumière est composée d'une branche sensiblement radiale 75a, grâce à laquelle l'ergot 74 assure le calage en translation de cette poulie, et d'une branche 75b, en forme d'arc de cercle, tolérant la rotation de cette poulie.

Lorsque le mécanisme de commande est au repos, il est dans la position représentée à la figure 3, position dans laquelle les deux poulies 60, 62 sont calées en rotation par les ergots 74 du poussoir de sécurité 65 et le levier basculeur 64 est en position de repos.

On notera que, dans cette position de repos, les crans de verrouillage 36 des coulisseaux associés à chacune des branches 6 sont engagés dans l'un des évidements 46 de l'armature, comme montré à la figure 7, et cela sous l'action de leur ressort de rappel 42, tandis que les leviers 34 sont, sous la poussée de leur ressort 52, dans leur position inactive représentée à la figure 6.

Lorsqu'il est nécessaire de modifier la position verticale du siège 1, montré à la figure 1, ou pour amener la poignée dans la position de rangement montrée à la figure 5, il suffit d'actionner le poussoir de sécurité 65, de manière à déplacer ses ergots 74, depuis les lumières radiales 75a jusqu'aux lumières en arc de cercle 75b des poulies 60 et 62. A ce stade, et avec la même main, il suffit de faire basculer le levier 64 dans le sens de la flèche 80 de figure 3 pour provoquer, par contact de l'extrémité de ce levier, qui est à gauche à la figure 3, avec le doigt 70 de la poulie 60, la rotation de cette poulie dans le sens de cette flèche 80. Cette rotation, qui s'effectue sur une fraction de tour, communique aux deux liens souples 40g et 40d une translation dans le sens des flèches, respectivement 81 et 82. Cette traction se répercute sur les premiers leviers 33 qui, en oscillant autour de leurs axes d'articulation 35, passent de la position de verrouillage représentée à la figure 7 à la position de déverrouillage représentée à la figure 6.

II est alors très aisé, en continuant à actionner les deux éléments 64 et 65 du mécanisme de commande, de télescoper les branches 6 de la poignée par rapport aux montants 5 de la structure de portage B, jusqu'à la position choisie, matérialisée par les évidements 46 de l'armature 11.

Dès que les moyens de commande sont relâchés, le levier basculeur 64 revient à sa position de repos initiale, sous l'action des ressorts 42, disposés dans les coulisseaux 32 et engageant les verrous 36 dans les évidements 46 de l'armature. En effet, le pivotement des leviers 33 se transmet, par les liens 40g et 40d, à la poulie 60 qui revient ainsi à sa position initiale, en permettant à l'ergot 74 de s'engager dans la branche radiale 75a de sa lumière.

Le basculement du levier 64 dans l'autre sens, après actionnement du poussoir de sécurité 65, provoque le tirage des liens souples 50g et 50d, et, en conséquence, provoque le pivotement des leviers 34 dont les extrémités libres décrivent une trajectoire au cours de laquelle elles rencontrent les redans 53 des leviers 15 des genouillères. La course des leviers 34 est suffisante pour amener les leviers 14 et 15, constituant les genouillères, de la position de verrouillage, représentée à la figure 6, à la position déverrouillée, représentée à la figure 7. Dans cette dernière position, le cran 13 du levier 14 libère le doigt 10 du levier de triangulation 8, qui peut alors pivoter librement en même temps que la structure de portage B est rapprochée de la structure de roulage A.

En fin de mouvement, c'est à dire lorsque les deux structures A et B précitées sont en position de rangement, le doigt 10 de chaque levier de triangulation 8 rencontre l'autre partie du redan 53 et provoque, par pivotement en sens inverse du levier 15, la mise en alignement de ce levier avec celui 14 et l'engagement de son cran 13 sur l'axe 10.

On notera, qu'à partir du moment où le doigt 10 circule dans la lumière 12, l'action sur le levier basculeur 64 peut cesser.

Comme précédemment, le levier basculeur 64 est ramené dans sa position médiane par les ressorts de rappel 52 des leviers 34.

Le mécanisme de déverrouillage des moyens de calage en position pliée ou dépliée des deux structures A et B de la poussette, présente l'avantage de n'être opérant que lorsque les branches 6 de la poignée 7 sont en position télescopée maximale, c'est à dire sont en position de rangement. En effet, dans les autres positions, le pivotement du second levier 34 est totalement inopérant, parce qu'il est trop éloigné du redan avec lequel il coopère. Cette disposition évite d'avoir recours à des moyens de sécurité complémentaire pour éviter le pliage accidentel de la poussette, lorsqu'elle est en position d'utilisation.

On notera que le mécanisme de calage D fonctionne aussi bien en configuration de rangement qu'en configuration d'utilisation et que son déverrouillage s'effectue, dans les deux cas, à partir de la poignée 7.

Il va maintenant être procédé à la description des moyens de fixation du support de la personne, et en l'occurrence du siège 1 sur les pattes 54 solidaires des coulisseaux 32. En effet, ces moyens de fixation contribuent, non seulement à l'amélioration du confort de l'utilisateur, mais aussi interviennent dans la réduction de l'encombrement de la poussette lorsqu'elle est en configuration de rangement.

Dans la forme d'exécution représentée, chacun des longerons 83 de l'armature du support de la personne, et en l'occurrence du siège 1, est lié à la patte 54 avec interposition, d'une part, d'un organe de réglage en orientation angulaire désigné de façon générale par la référence 84 et, d'autre part, d'un moyen de fixation amovible désigné de façon générale par la référence 85.

L'organe de réglage en orientation 84 est, comme montré aux figures 8 et 9, composé d'un disque 86, d'un boîtier 87, d'un patin 88 et d'un poussoir de commande 89. Le disque 86 est solidaire, par des moyens qui seront décrits ultérieurement, de la branche 6 de la poignée, et comporte, saillant vers l'intérieur, au moins une et de préférence deux couronnes crantées 90. La figure 9 montre que les intervalles entre crans des deux couronnes sont alignés suivant des diamètres.

Le boîtier 87 coiffe le disque 86 par rapport auquel il est monté libre en rotation autour d'un axe transversal 91 disposé axialement au centre du disque. Ce boîtier est traversé par une lumière 92, parallèle à l'un de ses diamètres et lui permettant d'être traversée par le longeron 83 de l'ossature du siège, longeron sur lequel il est fixé par des vis 93. Ce boîtier est réalisé en matière synthétique moulé et comporte intérieurement un logement diamétral 94, disposé parallèlement à la lumière 92, et servant de glissière pour le patin 88.

Comme le montre la figure 9, le patin 88 comporte un logement interne 95 pour un ressort de rappel 96. Deux des parois de ce logement sont traversées par une lumière longitudinale 97 servant au passage de l'axe 91, tout en tolérant le coulissement du patin dans le logement 94 du boîtier. Le ressort 96 vient en appui, d'un côté, sur l'axe 91 et, de l'autre côté, sur un retour coudé 99, solidaire du patin et venant dans le prolongement du débouché de son logement interne 95. Ce patin comporte également des doigts 100, saillant de sa face faisant vis à vis aux couronnes crantées 90. Ces doigts sont répartis de manière que, lorsque le patin est en position de verrouillage, sous l'action de rappel de son ressort 96, chacun d'eux se trouve dans l'un des intervalles entre crans des couronnes 90. Enfin, le patin 88 est solidaire d'un tenon transversal 101, saillant dans la zone du boîtier comportant la lumière 92. Ce tenon est au voisinage du longeron 83 de l'ossature du siège et permet la fixation du patin, par une vis 102, sur le poussoir de commande de déverrouillage 89. Dans la forme d'exécution représentée, ce poussoir est constitué par un tronçon de tube semi-circulaire pouvant coulisser sur le longeron 83 de l'ossature du siège mais il est évident qu'il peut présenter tout autre forme, pourvu qu'au moins l'une de ses extrémités, dépassant du boîtier, soit aisément accessible par l'utilisateur.

En position de verrouillage, les doigts 100 du patin 88 sont engagés dans les intervalles entre crans des couronnes crantées 90 et assurent donc le calage en rotation du patin 88 et, par le montage de ce patin dans le logement 94 du boîtier, le calage en rotation du boîtier, donc du siège 1 par rapport à la structure de portage B. Pour modifier la position angulaire de l'ossature du siège, il suffit, au moyen du poussoir 89, de faire coulisser chacun des patins 88 dans le sens de la flèche 103 de figure 9. Ce déplacement comprime le ressort 96 et amène les doigts 100 hors des couronnes crantées 90. Il est alors possible de faire pivoter manuellement l'ossature du siège de manière à lui donner l'angulation voulue. Dès que celle-ci est atteinte, le relâchement des poussoirs 89 permet aux ressorts 96 de plaquer les doigts 100 des patins 88 contre les couronnes crantées correspondantes et d'engager ces doigts dans un intervalle entre crans pour assurer le verrouillage angulaire du siège par rapport à l'ossature de portage.

On notera que, pour faciliter le coulissement du patin, le boîtier 87 comporte, dans le prolongement du logement 94, un défoncement 104.

Cet organe de réglage de l'orientation du support de la personne est également utilisé pendant la manoeuvre de mise en configuration de rangement de la poussette pour donner au support de la personne, par exemple au siège ou au berceau, la position angulaire qui, par rapport à l'ossature de portage, réduit au maximum l'encombrement de ce siège ou berceau, et en conséquence, l'encombrement général de l'ensemble pliable.

Le moyen de fixation amovible 85 est composé, comme montré à la figure 11, d'un corps de fixation 105, d'une pièce de fixation 106 et d'un moyen de verrouillage 107. Dans la forme d'exécution représentée, le corps de fixation 105 est solidaire de la patte 54 faisant partie du coulisseau 32, solidaire de la branche 6 de la poignée 7, tandis que la pièce de la fixation 106 est solidaire du disque 86 de l'organe de réglage de l'orientation 84, mais il est évident qu'ils peuvent être répartis de façon inverse.

La figure 11 montre bien que le corps de fixation 105 est essentiellement composé par une glissière 108, de section transversale en "C", borgne vers le bas, et débouchant vers le haut. Dans la forme d'exécution représentée, l'axe longitudinal de la glissière est perpendiculaire à la patte 54, mais il est évident qu'il peut également être incliné par rapport à cette console. Le fond de la glissière est traversé par un orifice de verrouillage 109 et par un évidement 110 qui, décalé longitudinalement par rapport à cet orifice, débouche du bord supérieur du corps de fixation. Enfin, dans la partie borgne inférieure de la glissière, est disposé un bloc 112 en matériau élastique.

La pièce de fixation 106 présente un tenon de section transversale en "T", apte à pénétrer dans la glissière 108. Celui-ci comporte un évidement longitudinal et axial 113 servant de logement au levier 114 des moyens de verrouillage 107. Ce levier est muni à son extrémité inférieure d'un crochet 115, ouvert vers le haut et s'articulant sur un bec transversal 116 saillant du fond de l'évidement 113. La figure 8 montre que ce bec comporte, en vis à vis du levier 114, une face pentue 117 facilitant le pivotement du levier 114.

Dans sa partie médiane, le levier 114 est muni d'un cran 118, apte à pénétrer dans l'orifice de verrouillage 109, et d'un cran 119 apte à s'engager dans l'évidement 110 de la pièce de fixation 105.

Les moyens de rappel élastiques du levier 114 sont constitués par un bloc 120 en matériau élastique se logeant dans l'évidement 113 du tenon 106. Cette pièce est fixée par collage sur les faces entre lesquelles elle est interposée, à savoir sur le fond de l'évidement 113 et sur la face faisant vis à vis à ce fond du levier 114.

Il ressort de ce qui précède que les moyens de verrouillage composés du levier 114 et du bloc élastique 120 font corps avec la pièce de fixation 106 et, en conséquence, font corps avec chacun des longerons de l'ossature 83 du support de la personne, que celui soit constitué par un siège, un berceau ou autre.

Pour mettre en place ce siège, il suffit d'engager les pièces de fixation 106 dans les glissières 108 des corps de fixation 105. Durant cet engagement, les chanfreins 118a précédant les crans 118 de chacun des leviers 114 tendent à faire pivoter les leviers en direction des pièces de fixation 106 jusqu'à ce que les crans 118 parviennent au niveau des orifices de verrouillage 109. A partir de cette position, les leviers 114 des deux moyens de fixation amovibles reviennent élastiquement à leur position de verrouillage et engagent les crans 118 et 119 dans leurs logements respectifs 109 et 110.

Pour désolidariser l'ensemble, il suffit de faire pivoter les leviers 114 vers l'intérieur dans le sens de la flèche 121 de figure 8, en comprimant les blocs élastiques 120, de manière à éloigner les crans 118 et 119 de leurs logements de verrouillage, et simultanément de faire coulisser les pièces de fixation 106 hors des glissières 108.

Ces moyens de fixation amovibles, de conception simple, permettent une interchangeabilité rapide du support, siège ou berceau, équipant la poussette, par exemple pour faire passer un siège d'une position dans laquelle l'enfant regarde vers l'avant à une position dans laquelle il regarde vers l'arrière, par rapport au sens d'avancement de la poussette. Cela permet aussi, lorsque le support de la personne ou de l'enfant est très encombrant, et, par exemple, est constitué par une nacelle volumineuse, de désolidariser ce support de l'ensemble de portage pour en réduire l'encombrement et en faciliter le rangement ou le stockage.

Il ressort de ce qui précède que les différents moyens composant l'ensemble pliable selon l'invention concourent à des buts communs, à savoir :
- faciliter les manipulations hors des changements de configuration,
- réduire l'encombrement en configuration de rangement,
- garantir la sécurité contre tous déréglages en configuration d'utilisation,
tout en étant fabriquables à moindre coût.

## Revendications

1. Ensemble pliable et réglable en hauteur pour le support, ou le transport d'une personne ou d'un enfant, composé :
- d'une structure d'appui ou de roulage (A) avec deux longerons (2),
- d'une structure de portage (B) du support (1) de la personne, et par exemple du siège ou berceau, cette structure comportant deux montants (5) articulés à leur base aux extrémités des longerons (2) et pouvant occuper, une position de rangement, dans laquelle ces montants sont sensiblement parallèles aux longerons (2), et une position d'utilisation, dans laquelle ils forment un angle aigu par rapport aux longerons (2),
- de moyens (C) de calage des deux structures (A et B) dans chacune de leurs deux positions,
- et d'une poignée de guidage (7) dont les branches (6) sont montées coulissantes par rapport aux montants (5) de la structure de portage (B), **caractérisé en ce que** le support (1) de la personne est fixé entre et sur les deux branches (6) de la poignée de guidage (7), tandis qu'un mécanisme (D) de calage en hauteur, en au moins deux position prédéterminées dudit support (1) dans sa configuration d'utilisation, est interposé entre au moins un montant (5) de la structure de portage (B) et la branche (6) correspondante de la poignée de guidage (7).

2. Ensemble pliable selon la revendication 1, **caractérisé en ce que** les moyens (C) de calage angulaire des deux structures comprennent, au moins d'un côté de ces structures :
- un levier de triangulation (8) dont l'extrémité inférieure est articulée sur le longeron (2) correspondant de la structure d'appui ou de roulage (A), et est associée à des moyens de rappel élastique (20), et dont l'extrémité supérieure est solidaire d'un axe transversal (10) monté coulissant dans une lumière longitudinale (12) du montant (5) correspondant,
- et un dispositif de verrouillage à genouillère réversible composé de deux leviers (14, 15) disposés dans le prolongement l'un de l'autre au voisinage de la lumière (12) précitée, chacun de ces leviers, d'une part, étant articulé sur le montant (5) correspondant de la structure de portage (B), au-delà de l'extrémité correspondant de la lumière (12), d'autre part, étant articulé par rapport à l'autre levier au moyen d'une articulation coulissante formée par un pion (18) coulissant dans une lumière (19), et de plus, comportant un cran (13) de calage de l'axe supérieur (10) du levier de triangulation (8), dans l'une ou l'autre de ses positions de rangement et d'utilisation.

3. Ensemble selon l'ensemble des revendications 1 et 2, **caractérisé en ce que** les branches (6) de la poignée (7) sont chacune solidaires d'un coulisseau inférieur (32) pouvant coulisser sur une glissière (27) de la structure de portage (B), ce coulisseau portant, articulés sur lui :
- d'une part, un premier levier (33) de positionnement des branches (6), dont l'une des extrémités est conformée en verrou de calage (36) et est apte à pénétrer dans l'un quelconque des évidements (46) ménagés dans le montant (5) correspondant de la structure de portage (B), l'autre extrémité dudit levier prenant appui sur un ressort de rappel (42), tendant à le maintenir en position de calage, et étant relié, par un lien souple, à des moyens de commande (60, 62, 64, 65) disposés sur la barre transversale de la poignée (7),
- et, d'autre part, un second levier (34), de déverrouillage de la fonction pliage-dépliage, dont l'une des extrémités est reliée, par un lien souple (50) aux moyens de commande disposés sur la barre transversale de la poignée (7), l'autre extrémité de ce levier étant apte à venir en contact avec un redan (53) saillant latéralement de l'un des leviers (14-15) de la genouillère réversible de verrouillage de la fonction pliage-dépliage, pour amener cette genouillère en position de déverrouillage.

4. Ensemble selon l'une quelconque des revendications 1 à 3, **caractérisé en ce que** chacun des montants de la structure de portage (B) est composé d'une armature métallique longiforme (11), de section transversale en "U", dont l'âme comporte les évidements (46) pour le verrou (36) de calage de la branche (6)

5. Ensemble selon l'une quelconque des revendications 3 à 4, **caractérisé en ce que** le premier levier (33) de positionnement des montants (6) est en forme de chape dont les deux branches (37a, 37b), passant de part et d'autre du coulisseau (32), portent un axe (38) qui, traversant le coulisseau (32) par des lumières (39), constitue organe d'accrochage du lien souple (40) et appui pour l'une des extrémités d'un ressort (42).

6. Ensemble selon l'une quelconque des revendications 3 à 5, **caractérisé en ce que** le second levier (34) de déverrouillage de la fonction pliage-repliage, est articulé d'un côté du coulisseau (32) et comporte un talon transversal (48) constituant appui pour un ressort de rappel (52), le maintenant en position d'inaction, et organe d'accrochage pour le lien souple (50).

7. Ensemble selon l'une quelconque des revendications 3 à 6, **caractérisé en ce que,** chacun des branches (6) de la poignée (7) est tubulaire et l'alésage ménagé dans le coulisseau (32), pour recevoir son extrémité inférieure, communique, par un alésage de transition (51), avec un chambrage (49) de positionnement du ressort (52) pour le second levier, ce chambrage (49) formant également passage pour le lien souple (50) correspondant, disposé, avec le lien (40) pour le premier levier (33), à l'intérieur de cette branche tubulaire (6).

8. Ensemble selon l'une quelconque des revendications 3 à 7, **caractérisé en ce que** chacune des branches (6) de la poignée est solidaire d'une traverse tubulaire (7) formant poignée, et comportant des moyens de commande composés :
- de deux poulies indépendantes (60, 62), disposées côte à côte, montées libres en rotation autour d'un axe longitudinal et à chacune desquelles sont fixées les extrémités des liens souples, respectivement (40g et 40d), et (50g et 50d) provenant, pour l'une, des premiers leviers (33), et pour l'autre, des seconds leviers (34),
- d'un levier basculeur (64), articulé entre les deux poulies (60-62) autour d'un axe longitudinal et dont chacune des extrémités est apte à faire pivoter d'une fraction de tour la poulie correspondante,
- et d'un moyen déverrouillable (65) de calage en rotation de ces poulies (60-62).

9. Ensemble selon la revendication 8, **caractérisé en ce que** les moyens de calage des poulies (60-62) sont composés d'un poussoir de sécurité (65) qui, monté coulissant transversalement dans la traverse (7) à l'encontre d'un ressort de rappel (72), comporte, en saillie de ses extrémités, deux ergots (74) pénétrant chacun dans une lumière ménagée dans la poulie (60-62) correspondante, cette lumière présentant une branche radiale (75a) de calage de la poulie, et une branche (75b) en arc de cercle, tolérant sa rotation.

10. Ensemble selon l'une quelconque des revendications 8 et 9, **caractérisé en ce que** chacune des poulies (60-62) comporte un doigt excentré (70), saillant de l'une de ses faces et disposé dans la trajectoire de basculement de l'une des extrémités du levier basculeur (64).

11. Ensemble pliable selon l'une quelconque des revendications 1 à 10, **caractérisé en ce que** le support (1) de la personne est lié à chacune des branches (6) de la poignée (7) avec interposition d'un organe (84) de réglage en orientation dudit support, ledit organe étant muni de moyens de verrouillage dans chacune de ses positions angulaires.

12. Ensemble pliable selon la revendication 11, **caractérisé en ce que** l'organe (84) de réglage en orientation est composé :
- d'un disque (86) solidaire de la branche (6) correspondante de la poignée (7) et comportant, saillant en direction du support (1) de la personne, au moins une couronne crantée (90),
- d'un boîtier (87) qui, coiffant le disque (86) et monté libre en rotation autour d'un axe transversal (91) traversant axialement le disque, est solidaire du support (1) de la personne et comporte un logement diamétral interne (94),
- d'un patin (88) qui, monté coulissant dans le logement diamétral (94) précité à l'encontre de moyens de rappel (96) le ramenant en position de verrouillage, porte des doigts en saillie (100) aptes à s'insérer dans les intervalles entre crans de la couronne crantée (90) du disque,
- et d'un poussoir (89) de commande du déverrouillage solidaire du patin (88) et dont l'extrémité dépasse hors du boîtier.

13. Ensemble pliable selon l'une quelconque des revendications 1 à 12, **caractérisé en ce** que le support (1) de la personne est lié à chacune des branches (6) de la poignée avec interposition d'un moyen (85) de fixation amovible comprenant :
- sur l'un des éléments branche (6) ou support (1), un corps de fixation (105) avec une glissière (108) de section en "C", borgne et débouchant vers le haut,
- sur l'autre élément, une pièce de fixation (106) avec un tenon ayant une section transversale en "T" apte à pénétrer dans la glissière en "C" (108),
- et des moyens (107) de verrouillage, en fin de course d'engagement, du tenon dans la glissière.

14. Ensemble selon la revendication 13, **caractérisé en ce que** les moyens (107) de verrouillage du moyen (85) de fixation amovible sont constitués :
- d'une part, par un levier de verrouillage (114) se logeant dans un évidement (113), longitudinal et axial, du tenon (106), ce levier comprenant :
- à son extrémité, opposée à celle libre, un crochet (115), ouvert vers le haut et s'articulant sur un bec transversal (116) saillant du fond de l'évidement (113),
- et, dans sa partie médiane, au moins un cran (118), saillant de sa face en vis à vis du fond de la glissière (108) et apte à pénétrer dans un orifice (109) du fond de cette glissière,
- et, d'autre part, par un bloc en matériau élastique (120) interposé entre l'extrémité libre du levier (114) et le fond de la partie supérieure de l'évidement (113) précité.

15. Ensemble selon l'ensemble des revendications 11 à 14, **caractérisé en ce que** le corps de fixation (105) portant la glissière (108) des moyens de fixation amovible (85) est constitué par une patte (54) qui, solidaire du coulisseau (32) lié à la branche (6) correspondante de la poignée (7), fait saillie dans l'intervalle entre les deux montants (5) de la structure de portage (B), tandis que le tenon (106), complémentaire de cette glissière, est solidaire et fait saillie du dos du disque (86) de l'organe (88) de réglage en orientation du support (1) de la personne.

## Patentansprüche

1. Höhenverstellbare und faltbare Einheit zum Tragen oder zum Transport einer Person oder eines Kindes, die beinhaltet:
- eine Struktur zum Abstützen oder zum Rollen (A) mit zwei Längsträgern (2),
- eine Tragstruktur (B) zum Tragen (1) der Person und beispielsweise für einen Sitz oder Tragkorb, wobei diese Struktur (2) mit ihrer Basis an den Längsträgern (2) befestigte Stützen (5) aufweist, die eine Klapposition, in der die Stützen im wesentlichen parallel zu den Längsträgern (2) angeordnet sind und eine Gebrauchsposition einnehmen können, in der sie einen spitzen Winkel im Bezug auf die Längsträger (2) einnehmen,
- Mittel (C) zum Feststellen der beiden Strukturen (A und B) in jeder der beiden genannten Positionen
- und einen Führungsgriff (7), dessen Bügel (6) im Bezug auf die Stützen (5) der Tragstruktur (B) verschiebbar angeordnet sind,
**dadurch gekennzeichnet, daß** der Personenträger (1) zwischen und auf den beiden Bügeln (6) des Führungsgriffes (7) befestigt ist, während ein Höhenfeststellmechanismus für wenigstens zwei vorbestimmte Positionen des besagten Trägers (1) In seinem Gebrauchszustand zwischen wenigstens einer Stütze (5) der Tragstruktur (B) und dem korrespondierenden Bügel (6) des Führungsgriffes (7) angeordnet ist.

2. Faltbare Einheit nach Anspruch 1, **dadurch gekennzeichnet, daß** die Mittel (C) zur Winkelfeststellung der beiden Strukturen wenigstens an einer Seite dieser Strukturen beinhalten:
- einen Dreieckslenker (8), dessen unteres Ende auf dem Längsträger (2), der zu der Struktur zum Abstützen oder Rollen (A) gehört, angelenkt ist und wobei der Dreieckslenker mit elastischen Federmitteln (20) versehen ist und wobei das obere Ende fest mit einer Durchgangsachse (10), die verschiebbar in einem Langloch (12) der korrespondierenden Stütze (5) gelagert ist, befestigt ist
- und eine Verriegelungsvorrichtung in Form eines reversiblen Gelenkmechanismus, die aus zwei Lenkern (14, 15) besteht, die beide sowohl als auch in der Verlängerung des vorbezeichneten Langloches (12) benachbart angeordnet sind, wobei jeder der beiden Lenker auf der einen Seite auf dem zur Tragstruktur (B) gehörenden Träger über dem korrespondierenden Ende des Langloches (12) angelenkt ist, auf der anderen Seite im Bezug auf den anderen Lenker mittels eines verschiebbaren Gelenkes angelenkt ist, das durch ein Metallstück (18) gebildet ist, welches verschiebbar in einem Langloch (19) ist, und die darüber hinaus eine Kerbe (13) zum Feststellen der oberen Achse (10) des Dreieckslenkers (8) in der einen oder anderen seiner Position zum Klappen oder Benutzen aufweist,

3. Einheit gemäß der Gesamtheit der Ansprüche 1 und 2, **dadurch gekennzeichnet, daß** die Bügel (6) des Griffes (7) fest in einer inneren Kulisse (32) angeordnet sind, die auf einer Gleitbahn (27) der Tragstruktur (B) gleiten kann, wobei die Kulisse, angelenkt an ihr, aufweist:
- auf der einen Seite einen ersten Lenker (33) zur Positionierung der Bügel (6), wobei eines der Enden als Verriegelungsbolzen (36) ausgestaltet ist und in der Lage ist, in eine der in der zur Tragstruktur (B) gehörenden Stütze (5) ausgesparten Taschen (46) einzudringen, wobei das andere Ende des besagten Lenkers an einer Rückstellfeder (42) zur Anlage kommt, die darauf abzielt, das andere Ende in der Verriegelungsposition zu halten und die durch ein elastisches Bindeglied mit Steuermitteln (60, 62, 64, 65) verbunden ist, welche an dem Querbügel des Griffes (7) angeordnet sind,
- und auf der anderen Seite einen zweiten Lenker (34) zur Entriegelung der Falt-/Entfaltfunktion, dessen eines Ende durch ein elastisches Bindeglied (50) mit Steuermitteln verbunden ist, die an dem Querbügel des Griffes (7) angeordnet sind, wobei das andere Ende dieses Lenkers in der Lage ist, mit einer von einem der Lenker (14, 15) des reversiblen Gelenkmechanismus zur Verriegelung der Falt-/Entfaltfunktion in Kontakt zu kommen, wobei er diesen Gelenkmechanismus in die Entriegelungsposition mitnimmt.

4. Einheit nach einem der Ansprüche 1 - 3, **dadurch gekennzeichnet, daß** jede der Stützen der Tragstruktur (B) aus einem metallischen Längsprofil (11) mit U-förmigem Querschnitt gebildet ist, dessen Inneres die Taschen (46) für den Verriegelungsbolzen (36) des Bügels (6) aufweist.

5. Einheit nach einem der Ansprüche 3 - 4, **dadurch gekennzeichnet, daß** der erste Lenker (33) zur Positionierung der Stützen (6) die Form einer Abdeckung aufweist, wobei die beiden Bügel (37a, 37b), die eine wie die andere die Kulisse (32) durchqueren, eine Achse (38) aufweisen, die die Kulisse (32) durch die Langlöcher (39) durchquerend ein Organ zum Einhängen des elastischen Bindegliedes (40) und Stütze für eine der Enden der Feder (42) bildet.

6. Einheit nach einem der Ansprüche 3 - 5, **dadurch gekennzeichnet, daß** der zweite Lenker (34) zur Entriegelung der Falt-/Entfaltfunktion gelenkig an einer Seite der Kulisse (32) gelagert ist und einen querverlaufenden Ansatz (48) aufweist, der eine Stütze für eine Rückholfeder (52) bildet, diese in einer inaktiven Position hält und Organ zum Einhängen des elastischen Bindegliedes (50) ist.

7. Einheit nach einem der Ansprüche 3 - 6, **dadurch gekennzeichnet, daß** jeder der Bügel (6) des Griffes (7) ringförmig ist und daß die Bohrung, ausgespart in der Kulisse (32) zur Aufnahme seines kleineren Endes verbunden ist durch eine Übergangsbohrung (51) mit einer Kammer (49) zur Positionierung der Feder (52) für den zweiten Lenker, wobei diese Kammer (49) gleichzeitig einen Durchgang für das elastische Bindeglied (50) bildet, welches mit dem Bindeglied (40) für den ersten Lenker (33), angeordnet im Innern dieses ringförmigen Bügels (6), korrespondiert.

8. Einheit nach einem der Ansprüche 3 - 7, **dadurch gekennzeichnet, daß** jeder der Bügel (6) des Griffes fest mit einer rohrförmigen Traverse (7) verbunden ist, welche den Griff bildet und die die zusammengesetzten Steuermittel aufweist:
- zwei unabhängige Scheiben (60, 62), die benachbart zueinander plaziert, frei drehbar um eine Längsachse, montiert sind und wobei an jeder von ihnen die Enden der elastischen Bindeglieder befestigt sind, im einzelnen (40g und 40d) und (50g und 50d), die zum einen von den ersten Lenkern (33) und zum anderen den zweiten Lenkern (34) ausgehen,
- einen Kipplenker (64), der zwischen den beiden Scheiben (60, 62) um eine Längsachse gelenkig gelagert ist und wobei jedes Ende in einer Lage ist, die entsprechende Scheibe um einen Teilbereich zu drehen
- und ein Entriegelungsmittel (65) zur Drehung dieser Scheiben (60, 62).

9. Einheit nach Anspruch 8, **dadurch gekennzeichnet, daß** die Mittel zum Festsetzen der Scheiben (60, 62) aus einem Sicherheitsausstoßer (65) bestehen, der in der Traverse (7) gegen eine Rückzugsfeder (72) gradlinig verschiebbar vorstehend über seinen Umfang (2) Nocken (74) aufweist, die jeder in ein in der korrespondierenden Scheibe (60, 62) ausgespartes Langloch eingreifen, wobei das Langloch einen radialen Abschnitt (75a) zur Festsetzung der Scheibe und einen Kreisbogenabschnitt (75b), der die Rotation der Scheibe ermöglicht, bildet.

10. Einheit nach einem der Ansprüche 8 und 9, **dadurch gekennzeichnet, daß** jede Scheibe (60, 62) einen exzentrischen Finger (70) aufweist, der über eine ihrer Stirnflächen vorsteht und der in der Kippbahn einer der Enden des Kipplenkers angeordnet ist.

11. Faltbare Einheit nach einem der Ansprüche 1 - 10, **dadurch gekennzeichnet, daß** der Personenträger mit jedem der Bügel (6) des Griffes (7) unter Zwischenschaltung eines Einstellorganes (84) für die Orientierung des besagten Trägers verbunden ist, wobei das besagte Organ mit Mitteln zur Verriegelung in jeder seiner Winkelpositionen versehen ist.

12. Faltbare Einheit nach Anspruch 11, **dadurch gekennzeichnet, daß** das Einstellorgan (84) zum Verschwenken aufweist:
- eine fest mit dem korrespondierenden Bügel (6) des Griffes (7) verbundene Scheibe (86) und vorstehend in Richtung des Personenträgers (1) wenigstens eine Rastkappe (90),
- ein Gehäuse (87), die Scheibe (86) überdeckend und frei drehbar um eine querverlaufende Achse (91), die wiederum die Scheibe axial durchquert, fest mit dem Personenträger verbunden ist und einen mittigen inneren Sitz (94) aufweist,
- eine Gleitkufe (88), die in dem vorbezeichneten mittigen Sitz (94) verschiebbar gegen die Federmittel (96), welche sie in die Verriegelungsposition mitnimmt, vorstehende Finger (100) aufweist, die dazu geeignet sind, in die Zwischenräume zwischen den Kerben der Rastkappe der Scheibe einzugreifen
- und einen Steuerausstoßer (89) für die feste Entriegelung der Gleitkufe (88) und wobei das Ende aus dem Gehäuse heraustritt.

13. Faltbare Einheit nach einem der Ansprüche 1 - 12, **dadurch gekennzeichnet, daß** der Personenträger (1) mit jeder der beiden Bügel (6) des Griffes unter Zwischenschaltung eines lösbaren Befestigungsmittels (35) verbunden ist, welches beinhaltet:
- über einem der Bügelelemente (6) oder des Trägers (1) einen Befestigungskörper (105) mit einer Gleitführung (108) in Form eines unechten "C" und nach oben geöffnet,
- an dem anderen Element ein Befestigungsteil (106) mit einem Steckfuß, der den Querschnitt eines "T" aufweist und in die C-förmige Gleitführung (108) paßt
- und Mittel zur Verriegelung (107) des Steckfußes in der Gleitführung am Ende des Gleitweges.

14. Einheit nach Anspruch 13, **dadurch gekennzeichnet, daß** die Verriegelungsmittel (107) zur lösbaren Festlegung gebildet sind durch:
- auf der einen Seite einen Verriegelungsschieber (140), der in eine axiale längs verlaufende Aussparung des Steckfußes (106) eingreift, wobei der Schieber aufweist:
- an seinem dem freien Ende gegenüberliegenden Ende einen Haken (115), der nach oben geöffnet ist und über eine querverlaufende, über den Boden der Aussparung (113) vorstehende Nase greift
- und in seinem Mittelbereich wenigstens eine Raste (118), die über die Grundfläche vis à vis des Bodens der Gleitführung hervorsteht und in eine Aussparung (109) am Boden der Gleitführung eingreifen kann
- und auf der anderen Seite durch einen Block aus elastischem Material (120), der zwischen dem freien Ende des Schiebers (114) und dem Boden des oberen Teiles der vorbezeichneten Aussparung (113) angeordnet ist.

15. Einheit gemäß der Gesamtheit der Ansprüche 11 - 14, **dadurch gekennzeichnet, daß** der Befestigungskörper (105) der die Gleitführung (108) für die lösbaren Befestigungsmittel (85) aufweist, durch ein Befestigungseisen (54) gebildet ist, das fest mit der Kulisse (32) verbunden, die am entsprechenden Bügel (6) des Griffes (7) liegt, in den Zwischenraum zwischen die beiden Stützen (5) der Tragstruktur (B) vorsteht, während der Steckfuß (106) passend zu dieser Gleitführung fest ist und über die Rückseite der Scheibe (86) des Einstellorganes (88) für die Richtungseinstellung des Personenträgers vorsteht.

## Claims

1. Folding and height-adjustable assembly for supporting or transporting an individual or a child, composed:
- of a bearing or rolling structure (A) with two longitudinal members (2),
- of a structure (B) for carrying the support (1) for the individual, and for example the seat or cradle, this structure including two upright members (5) articulated at their base to the ends of the longitudinal members (2) and able to occupy a storage position in which these upright members are substantially parallel to the longitudinal members (2), and a position of use in which they form an acute angle with respect to the longitudinal members (2),
- of means (C) for immobilizing the two structures (A and B) in each of their two positions,
- and of a guiding handle (7), the branches (6) of which are mounted so that they can slide with respect to the upright members (5) of the carrying structure (B), characterized in that the support (1) for the individual is fixed between and onto the two branches (6) of the guiding handle (7), while a mechanism (D) for locking the height, in at least two predetermined positions of the said support (1) in its use configuration, is interposed between at least one upright member (5) of the carrying structure (B) and the corresponding branch (6) of the guiding handle (7).

2. Folding assembly according to Claim 1, characterized in that the means (C) for angular immobilization of the two structures comprise, at least on one side of the structures:
- a cross-bracing lever (8), the lower end of which is articulated to the corresponding longitudinal member (2) of the bearing or rolling structure (A), and is associated with elastic return means (20), and the upper end of which is secured to a transverse pin (10) mounted so that it can slide in a longitudinal slot (12) of the corresponding upright member (5),
- and a locking device with a reversible hinge joint, composed of two levers (14, 15) located in the extension of one another close to the aforementioned slot (12), each of these levers on the one hand being articulated to the corresponding upright member (5) of the carrying structure (B) beyond the corresponding end of the slot (12) and, on the other hand, being articulated with respect to the other lever by means of a sliding joint formed of a peg (18) sliding in a slot (19) and, in addition, including a notch (13) for immobilizing the upper pin (10) of the cross-bracing lever (8) in one or other of its storage or use positions.

3. Assembly according to both of Claims 1 and 2, characterized in that the branches (6) of the handle (7) are each secured to a lower slide (32) which can slide on a slideway (27) of the carrying structure (B), this slide carrying, articulated to it:
- on the one hand, a first lever (33) for positioning the branches (6), one of the ends of which is shaped into a locking bolt (36) and can penetrate either one of the recesses (46) made in the corresponding upright member (5) of the carrying structure (B), the other end of the said lever bearing on a return spring (42) intending to keep it in the immobilizing position, and being connected by a flexible link to operating means (60, 62, 64, 65) located on the transverse bar of the handle (7),
- and, on the other hand, a second lever (34) for unlocking the folding-unfolding function, one of the ends of which is connected, by a flexible link (50), to operating means located on the transverse bar of the handle (7), the other end of this lever being able to come into contact with a step (53) projecting laterally from one of the levers (14, 15) of the reversible hinge joint for locking the folding/unfolding function in order to bring this hinge joint into an unlocked position.

4. Assembly according to any one of Claims 1 to 3, characterized in that each of the upright members of the carrying structure (B) is composed of a long metal framework element (11) of U-shaped transverse section, the web of which has recesses (46) for the bolt (36) for immobilizing the branch (6).

5. Assembly according to any one of Claims 3 to 4, characterized in that the first lever (33) for positioning the upright members (6) is in the form of clevis of which the two branches (37a, 37b), passing on either side of the slide (32), carry a pin (38) which, passing through the slide (32) via slots (39), constitutes a member for fastening the flexible link (40) and a member against which one of the ends of the spring (42) can bear.

6. Assembly according to any one of Claims 3 to 5, characterized in that the second lever (34) for unlocking the folding/folding-up function is articulated to one side of the slide (32) and includes a transverse spur (48) constituting a bearing point for a return spring (52) keeping it in an inactive position, and constituting a fastening member for the flexible link 50.

7. Assembly according to any one of Claims 3 to 6, characterized in that each of the branches (6) of the handle (7) is tubular and the bore made in the slide (32) for accommodating its lower end communicates, via a transitional bore (51), with a counterbore (49) for positioning the spring (52) for the second lever, this counterbore (49) also forming a passage for the corresponding flexible link (50) located, with the lin (40) for the first lever (33), inside this tubular branch (6).

8. Assembly according to any one of Claims 3 to 7, characterized in that each of the branches (6) of the handle is secured to a tubular cross member (7) forming a handle, and including operating means composed of:
- two independent pulleys (60,62) located side by side and mounted so that they are free to rotate about a longitudinal axis and the ends of the flexible links (40 g and 40 d) and (50 g and 50 d) coming, in the case of one of them, from the first levers (33) and, in the case of the other, from the second levers (34), being fastened to them respectively,
- a rocker lever (64) articulated between the two pulleys (60, 62) about a longitudinal axis, and each of the ends of which is able to cause the corresponding pulley to pivot through a fraction of a turn,
- and an unlockable means (65) for rotationally immobilizing these pulleys(60, 62).

9. Assembly according to Claim 8, characterized in that the means for immobilizing the pulleys (60, 62) are composed of a safety push-button (65) which, mounted so that it can slide transversely in the cross member (7) against a return spring (72) includes, projecting from its ends, two stubs (74) each one penetrating a slot made in the corresponding pulley(60, 62), this slot having a radial branch (75a) for immobilizing the pulley, and a branch (75b) in the shape of a circular arc allowing this rotation.

10. Assembly according to either of Claims 8 and 9, characterized in that each of the pulleys (60, 62) includes an eccentric finger (70) projecting from one of its faces and located in the rocking path of one of ends of the rocking lever (64).

11. Folding assembly according to any one of Claims 1 to 10, characterized in that the support (1) for individual is connected to each of the branches (6) of the handle (7) with interposition of a member (84) for adjusting the orientation of the said support, the said member being equipped with means for locking in each of its angular positions.

12. Folding assembly according to Claim 11, characterized in that the member (84) for orientational adjustment is composed of:
- a disc (86) secured to the corresponding branch (6) of the handle (7) and including, projecting towards the support (1) for the individual, at least one toothed ring (90),
- a casing (87) which, covering the disc (86) and mounted so that it is free to rotate about a transverse pin (91) passing axially through the disc is secured to the support (1) for the individual and includes an internal diametral housing (94),
- a runner (88) which, mounted so that it can slide in the aforementioned diametral housing (94) against return means (96) returning it to the locked position, carries projecting fingers (100) capable of becoming inserted in the gaps between teeth of the toothed ring (90) of the disc,
- and a push-button (89) for bringing about unlocking, secured to the runner (88), and the end of which extends beyond the casing.

13. Folding assembly according to any one of Claims 1 to 12, characterized in that the support (1) for the individual is connected to each of the branches (6) of the handle with interposition of a removable fastening means (85) comprising:
- on one of the elements, branch (6) or support (1), a fastening body (105) with a slideway (108) of C-shaped section, which is blind and opens upwards,
- on the other element, a fastening component (106) with a tenon having a T-shaped transverse section able to penetrate the C-shaped slideway (108),
- and means (107) for locking the tenon in the slideway at the end of the engagement travel.

14. Assembly according to Claim 13, characterized in that the means (107) for locking the removable fastening means (85) consist:
- on the one hand, of a locking lever (114) housed in a longitudinal and axial recess (113) of the tenon (106), this lever comprising:
- at its end opposite the free end, a hook (115) open upwards and articulated to a transverse boss (116) projecting from the bottom of the recess (113),
- and, in its middle part, at least one tooth (118) projecting from its face opposite the bottom of the slideway (108) and able to penetrate an orifice (109) at the bottom of this slideway,
- and, on the other hand, of a block of elastic material (120) interposed between the free end of the lever (114) and the bottom of the upper part of the aforementioned recess (113).

15. Assembly according to all of Claims 11 to 14, characterized in that the fastening body (105) carrying the slideway (108) for the removable fastening means (85) consists of a tab (54) which, secured to the slide (32) connected to the corresponding branch (6) of the handle (7), projects into the gap between the two upright members (5) of the carrying structure (B), while the complementary tenon (106) of this slideway is secured to and projects from the back of the disc (86) of the member (88) for the orientational adjustment of the support (1) for the individual.
